# EUROPÄISCHE PATENTANMELDUNG

(11) **EP 2 296 130 A2**
(43) Veröffentlichungstag der Anmeldung: **16.03.2011**
(21) Anmeldenummer: 10009654.4
(22) Anmeldetag: 15.09.2010
(51) Int. Cl.: G09B 23/28

(54) **Vorrichtung und Verfahren zum Trainieren von Operationen der perkutanen Nierenstein-Lithotripsie**

(30) Priorität: 15.09.2009 DE 102009041321
(71) Anmelder: Samed GmbH Mobile Urologie, 01187 Dresden (DE)
(72) Erfinder: Forke, Klaus, Dr., 01156 Dresden (DE)
(74) Vertreter: Adler, Peter

(57) **Zusammenfassung**

Der Erfindung, die eine Vorrichtung zum Trainieren von Operationen der perkutanen Nierenstein-Lithotripsie, einen Substratkörper sowie ein Verfahren betrifft, liegt die Aufgabe zugrunde, die für die perkutane Nierenstein Lithotripsie (PCNL) erforderlichen operativen Fähigkeiten einschließlich der richtigen und sicheren Handhabung der eingesetzten Technik zu erlernen und zu trainieren. Dies wird durch eine Vorrichtung gelöst, die eine Haube, einen unter einer Öffnung in der Haube angeordnetes Aufnahmemittel zur Aufnahme eines Substratkörpers und einen um die Öffnung schwenkbaren Ring aufweist, der der mit einem winkelverstellbaren Führungselement verbunden ist. Die Haube kann dabei die Bauchdecke simulieren und durch die Öffnung hindurch kann eine Operation in dem Substratkörper simuliert werden.

## Beschreibung

Die Erfindung betrifft Vorrichtung zum Trainieren von Operationen der perkutanen Nierenstein-Lithotripsie, einen Substratkörper sowie ein Verfahren zum Trainieren von Operationen der perkutanen Nierenstein-Lithotripsie.

Operationen der perkutanen Nierenstein-Lithotripsie werden üblicherweise in folgenden Schritten durchgeführt:
Bei einem liegenden Patienten wird mit einem geeigneten Ultraschallverfahren, die Lage von Nierensteinen ermittelt. Unter Ultraschall wird anschließend eine Punktionskanüle perkutan bis zu dem zu entfernenden Nierenstein eingebracht (Punktion). Diese Punktion dient einerseits der exakten Lagefeststellung. Andererseits wird dadurch auch ein therapeutischer Arbeitskanal geschaffen.

Über die Punktionskanüle wird ein Führungsdraht eingeschoben und anschließend die Punktionskanüle herausgezogen. Entlang des Führungsdrahtes wird dann ein Dilatator zur Aufweitung des Arbeitskanales eingeschoben. Dies ist auch als Seldinger-Technik beschrieben. Durch nachfolgendes Aufschieben weiterer Dilatatoren mit jeweils größerem Durchmesser erfolgt dann ein weiteren Puschieren des Arbeitskanales bis zu einer Weite, in die dann das Operationsinstrument in Form eines Endoskops eingeschoben werden kann. Mit dem eingeschobenen vorderen Ende des Instruments wird dann der Nierenstein zerstört, so dass die Fragmente abgesaugt werden oder abfließen können.

Das gesamte Operationsverfahren ist kein Routineverfahren und wird zudem meist im Halbdunkel durchgeführt, da in Zeitabständen zu Kontrollzwecken geröntgt werden muss.

Derzeit erfährt der Operateur seine Operationspraxis am Patienten. Es wäre zur Vermeidung von Operationsfehlern allerdings wünschenswert, dass die Praxis unabhängig vom Patienten geübt werden kann.

Dementsprechend ist es Aufgabe der Erfindung, eine Vorrichtung, ein Trainingssubstrat und ein Verfahren anzugeben, mit denen es möglich wird, die für die perkutane Nierenstein Lithotripsie (PCNL) erforderlichen operativen Fähigkeiten einschließlich der richtigen und sicheren Handhabung der eingesetzten Technik zu erlernen und zu trainieren. Die Therapiequalität hängt wesentlich von der Beherrschung aller eingesetzten Komponenten ab. Diese Aufgabe steht für den operierenden Arzt wie auch die OP-Schwestern gleichermaßen.

Die Aufgabe wird durch eine Vorrichtung mit den Merkmalen des Anspruches 1 gelöst. Die Ansprüche 2 bis 5 zeigen Ausgestaltungen der erfindungsgemäßen Merkmale.

Die Vorrichtung weist eine Haube, einen unter einer Öffnung in der Haube angeordnetes Aufnahmemittel zur Aufnahme eines Substratkörpers und einen um die Öffnung schwenkbaren Ring auf, der der mit einem winkelverstellbaren Führungselement verbunden ist. Die Haube kann dabei die Bauchdecke simulieren und durch die Öffnung hindurch kann eine Operation in dem Substratkörper simuliert werden.

Zur Verhinderung des unkontrollierten Ausflusses von Wasser, das währen des Trainings eingesetzt wird, ist vorgesehen, dass unter der Haube ein das Aufnahmemittel aufnehmenden Auffangwanne angeordnet ist.

Besonders zweckmäßig kann die Haube dadurch ausgebildet werden, dass sie um eine im wesentlichen horizontale Achse schwenkbar angeordnet ist. Dabei ist es auch möglich, dass Zur Erleichterung des Trainings ist vorgesehen, dass die Haube Stützmitteln zur Instrumentenablage versehen ist.

Die Aufgabe wird auch durch einen Substratkörper mit den Merkmalen des Anspruches 6 gelöst. Hierzu zeigen die Ansprüche 7 und 8 besondere Ausgestaltungen.

Ein erfindungsgemäßer Substratkörper ist mit in einer Dose angeordneten Struktur in Form einer Nierenbeckenstruktur versehen. Dabei ist die Dose durch einen entfernbaren Deckel und einen entfernbaren Boden verschlossen.

Der Substratkörper kann als Trainings-Substratkörper ausgebildet sein, indem zwischen der Struktur als Trainingsstruktur und dem Deckel eine Schicht aus einer fleischähnlichen Substanz angeordnet ist.

Zur vollständigen Simulation einer Operation ist vorgesehen, dass in die Nierenbeckenstruktur Simulate von Nierensteinen eingebracht sind.

Die Aufgabe wird auch durch ein Verfahren mit den Merkmalen des Anspruches 9 gelöst. Ausgestaltungen der verfahrengemäßen Merkmale sind in den Ansprüchen 10 und 11 enthalten.

Darin ist vorgesehen, dass ein mit einer sichtbaren Diagnostikstruktur versehener Diagnostik-Substratkörper mit seiner Diagnostikstruktur lageorientiert fixiert wird. Eine Punktionskanüle wird in der Diagnostikstruktur positioniert wird und die damit erreichte geometrische Lage über Positionierhilfsmittel eindeutig festgehalten. Anschließend wird der Diagnostik-Substratkörper durch einen Trainings-Substratkörper mit einer zu der Diagnostikstruktur identischen jedoch nicht sichtbaren Trainingsstruktur ersetzt und identisch lageorientiert fixiert. Die Punktionskanüle wird entsprechend der mittels der Positionierhilfsmittel festgehaltenen geometrischen Lage in den Trainings-Substratkörper mit der Trainingsstruktur unter Schaffung eines Arbeitskanales in der Abdeckung der Trainingsstruktur eingebracht und danach die Punktionkanüle entfernt. In den Arbeitskanal wird dann ein Operationsinstrument eingebracht und schließlich mit dem Operationselement die Trainingsstruktur bearbeitet.

Auch wenn es zur vollständigen Simulation einer Operation zu Trainingszwecken gehört, kann grundsätzlich auch ohne Führungsdraht gearbeitet werden. Jedoch ist es zweckmäßig, dass nach dem Einbringen der Punktionskanüle in den Trainings-Substratkörper in die Punktionskanüle ein Führungsdraht eingebracht wird, der nach Entfernen der Punktionskanüle in dem Trainings-Substratkörper verbleibt.

Weiterhin ist es zweckmäßig, zur vollständigen Simulation vorzusehen, dass der Arbeitskanal vor dem Einbringen des Operationsinstrumentes puschiert wird. Grundsätzlich kann jedoch die Gewebeschicht so gestaltet werden, dass auch ohne die Notwendigkeit des Puschierens, d.h. des erweitern des Arbeitskanales zu arbeiten.

Das erfindungsgemäße Verfahren setzt als Diagnostik-Ergebnis die Kenntnis der Nierenbeckenstruktur und die Lage der Steine voraus. Die diagnostische Erkenntnis wird in einem Diagnostik-Substratkörper festgehalten, der eine Diagnostikstruktur beinhaltet, um Einstellungen für die nachfolgende Operation vorzunehmen. Dabei wird das oben dargestellte praktizierte Verfahren bei dem erfindungsgemäßen Trainingsverfahren hinsichtlich des Diagnoseverfahrensteiles, modifiziert. So wird bei dem erfindungsgemäßen Trainingsverfahren anstelle des gewonnenen Ultraschallbildes, das der Positionierung der Punktionskanüle dient, die sichtbare Diagnostikstruktur eingesetzt. In diese Diagnostikstruktur erfolgt das Einbringen der Punktionskanüle unter Sichtbedingungen, während bei dem praktizierten Verfahren das Einbringen der Punktionskänüle durch ein Ultaschallbild sichtbar gemacht wird.

Ein Führungsdraht wird jetzt allerdings noch nicht eingebracht. Vielmehr werden die geometrischen Einstellungen der Punktionskanüle anhand der Diagnostikstruktur, die im übrigen der Struktur des Trainings-Substratkörpers entspricht, festgehalten. Somit treten die Verfahrensschritte Einlegen des Diagnostik-Substratkörpers, Einbringen der Punktionskanüle und Fixieren der geometrischen Lage der Punktionskanüle in dem erfindungsgemäßen Verfahren den Verfahrensschritten Anfertigen eines Ultraschallbildes ( = Einsetzen einer Diagnostikstruktur), Einstechen der Punktionskanüle ( = Einbringen der Punktionskanüle in die Diagnostikstruktur) unter Ultraschallbeobachtung ( = unter Sichtbedingungen), wobei die Lage der Punktionskanüle durch das Gewebe des Patienten gehalten wird ( = Fixierung der geometrischen Lage).

Anschließend wird der Trainings-Substratkörper eingesetzt, der die gleiche Struktur wie die Diagnostikstruktur aufweist, die auch lagegleich positioniert wird. Die Struktur in dem Diagnostik-Substratkörper wie auch in dem Trainings-Substratkörper entspricht der Nierenbeckenstruktur, wobei in die Nierenbeckenstruktur Simulate von Nierensteinen eingebracht sind. Die Struktur in dem Trainings-Substratkörper ist allerdings abgedeckt.

Nunmehr wird die Punktionskanüle entsprechend der vorher ermittelten und fixierten geometrischen Lagedaten in das Trainings-Substratkörper eingeschoben. Ab diesem Zeitpunkt sind die Verfahrenschritte zwischen dem Simulationsverfahren und dem praktizierten Verfahren gleich. Nach Einbringen der Punktionskanüle in den Trainings-Substratkörper bis hin zu den im Trainings-Substratkörper angeordneten simulierten Nierensteine wird der Führungsdraht eingebracht. Anschließend wird die Punktionskanüle entfernt. Der Arbeitskanal wird puschiert, indem Dilatatoren eingeschoben werden, bis das Instrument eingesetzt werden kann. Anschließend kann die Zerstörung des Nierensteinsimulats im Trainings-Substratkörper erfolgen.

Selbstverständlich ist es dabei auch möglich, den Trainings-Substratkörper so zu konfigieren, dass das Puschieren erleichtert wird, insbesondere wenn insbesondere Wert auf das Training des eigentlichen Zwecks der Operation, nämlich das Zerstören des Nierensteines, gelegt wird. Auch auf das Einsetzen eines Führungsdrahtes kann erforderlichenfalls verzichtet werden, da ja die Führung durch die Fixierung der geometrischen Einstellungen der Punktionskanüle erfolgt oder erfolgen kann.

Für die Durchführung des erfindungsgemäßen Verfahrens werden also zwei Substrate benötigt, ein Diagnostiksubstrat oder einer Diagnostik-Substratkörper mit einer sichtbaren Nierenbeckenstruktur und sichtbaren Nierensteinen und ein Trainingssubstrat oder ein Trainings-Substratkörper mit der identischen Nierenbeckenstruktur, jedoch durch eine Schicht abgedeckt. Diese Schicht sollte vorzugsweise aus organischen Material bestehen, um auch das Gefühl des Widerstandes organischen Gewebes bei dem Training zu haben.

Die Erfindung soll nachfolgend anhand eines Ausführungsbeispieles näher erläutert werden. In den zugehörigen Zeichnungen zeigt
- Fig. 1: einen Schnitt durch einen erfindungsgemäßen Diagnostik-Substratkörper entlang der Linie I-I in Fig. 2,
- Fig. 2: einen Querschnitt durch einen erfindungsgemäßen Diagnostik-Substratkörper entlang der Linie II-II in Fig. 1,
- Fig. 3: einen Schnitt durch einen erfindungsgemäßen Trainings-Substratkörper entlang der Linie III-III in Fig. 4,
- Fig. 4: einen Querschnitt durch einen erfindungsgemäßen Diagnostik-Substratkörper entlang der Linie IV-IV in Fig. 3,
- Fig. 5: eine allgemeine perspektivische Übersichtszeichnung,
- Fig. 6: eine Ansicht der erfindungsgemäßen Vorrichtung im geöffneten Zustand,
- Fig. 7: eine Vorderansicht der erfindungsgemäßen Vorrichtung,
- Fig. 8: eine Rückansicht der erfindungsgemäßen Vorrichtung,
- Fig. 9: eine Oberansicht der erfindungsgemäßen Vorrichtung und
- Fig. 10: eine Detailansicht eines Führungselementes.

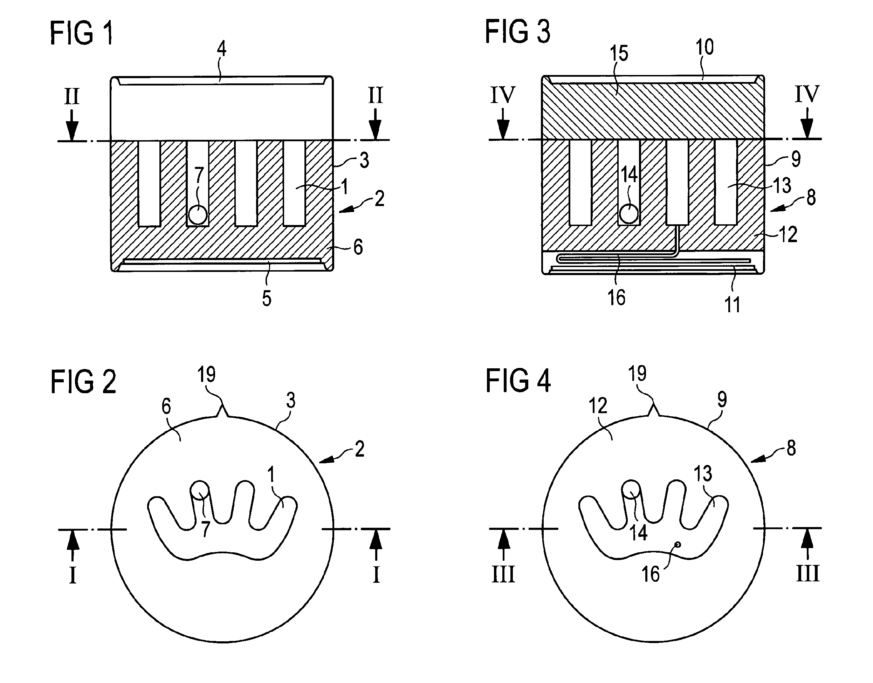

Das erfindungsgemäße Verfahren setzt als Diagnostik-Ergebnis die Kenntnis der Nierenbeckenstruktur und die Lage der Steine voraus. Wie in den Fig. 1 und Fig. 2 dargestellt, ist dieses Diagnostik-Ergebnis in einer Diagnostikstruktur 1 eines Diagnostik-Substratkörpers 2 festgehalten. Dieser Diagnostik-Substratkörper 2 besteht nämlich aus einer Dose 3, die mit einem oberen Deckel 4 und einem unteren Deckel 5 versehen ist. In der Dose 3 ist ein Strukturkörper 6 angeordnet, der die Diagnostikstruktur 1 aufweist. Darin ist auch ein Simulat 7 eines diagnostizierten Nierensteines angeordnet.

Sehr ähnlich ist der Trainings-Substratkörper 8 aufgebaut, wie er in Fig. 3 und Fig. 4 dargestellt ist. Dieser Trainings-Substratkörper 8 besteht nämlich aus einer Dose 9, die mit einem oberen Deckel 10 und einem unteren Deckel 11 versehen ist. In der Dose 9 ist ein Strukturkörper 12 angeordnet, der die Trainingsstruktur 13 aufweist, die identisch zu der Diagnostikstruktur 1 ist. Darin ist auch ein Simulat 14 eines Nierensteines ist identisch zu dem Simulat 7. Allerdings ist die Trainingsstruktur 13 mit einer Gewebeschicht 15 abgedeckt. Diese simuliert das über dem Nierenbecken liegende Gewebe und nimmt die Sicht auf die Trainingsstruktur 13. Weiterhin ist die Trainingsstruktur 13 mit einem Schlauch 16 versehen. Dieser Schlauch 16 simuliert den Urether. Über diesen lässt sich die Trainingsstruktur 13 mit Flüssigkeit füllen. Der Schlauch 16 ist im konfektionierten Zustand der Dose 9 zwischen dem Strukturkörper 12 und dem unteren Deckel 11 angeordnet und kann beim Einsatz des Trainings-Substratträgers 8 nach Entfernen des unteren Deckels 11 entnommen werden.

Der Diagnostik-Substratkörper 2 dient als Ortungssubstrat. Der Diagnostik-Substratkörper 2 wird zunächst in einem Aufnahmeblock 17 unterhalb der Öffnung 20 fixiert und eine darüber angeordnete Haube 21 geschlossen.

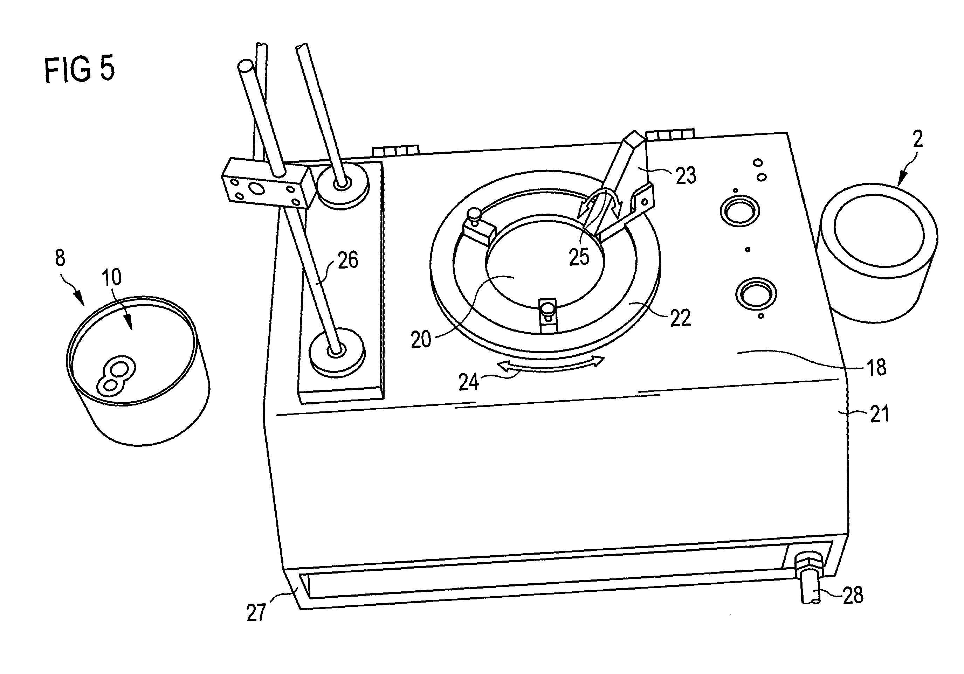

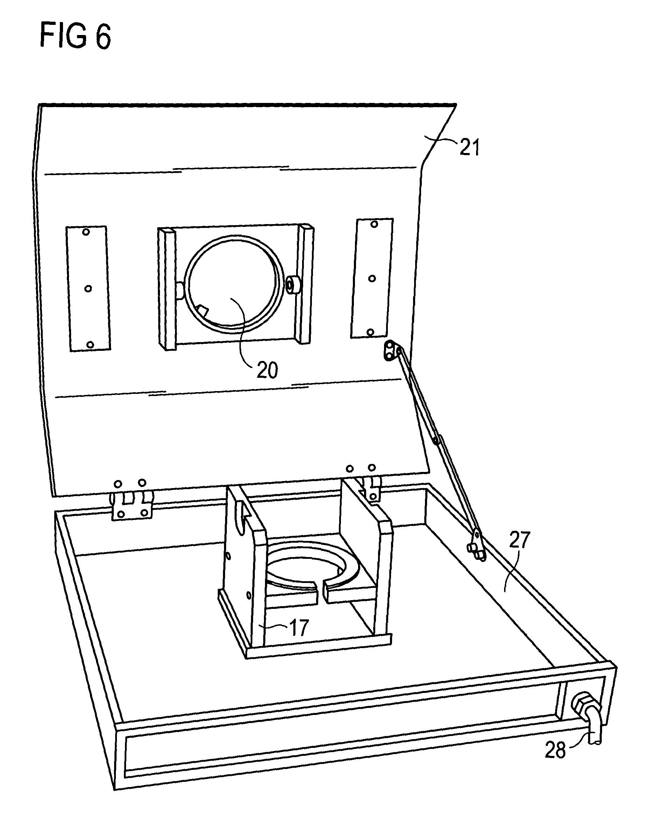

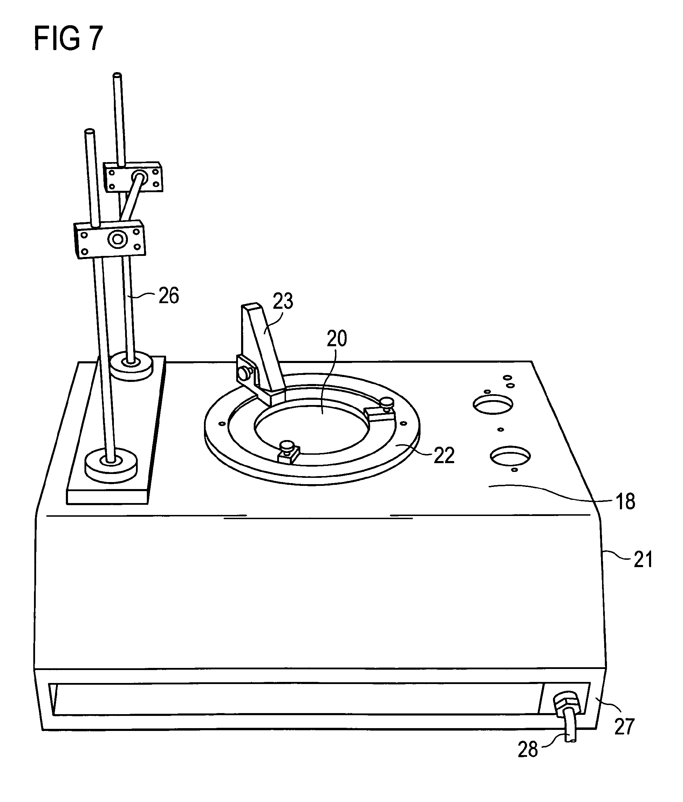

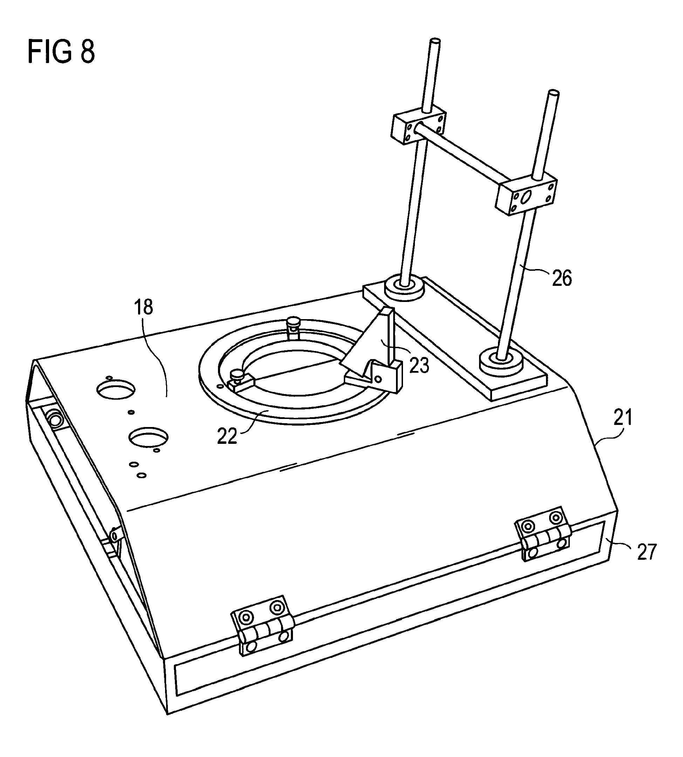

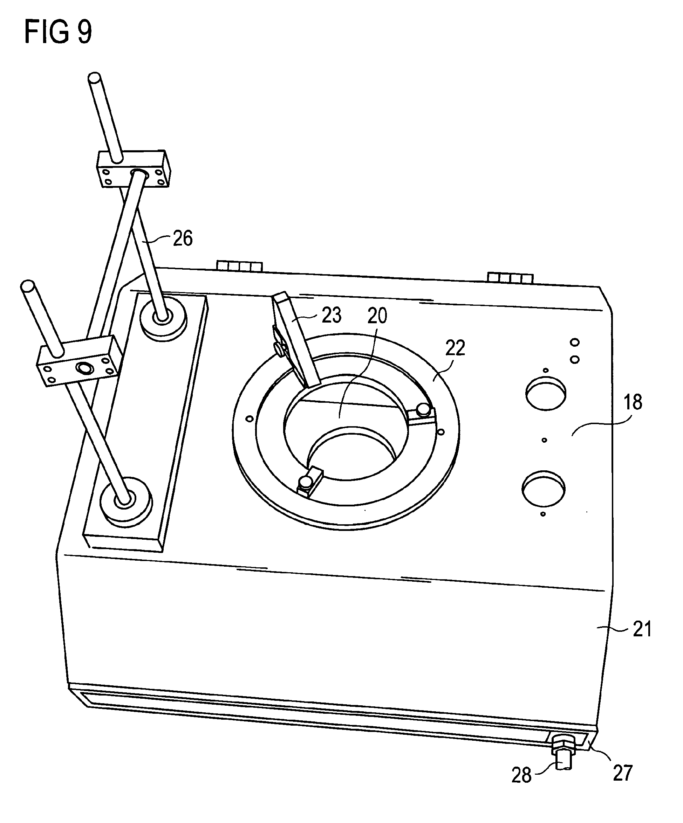

Wie ist den Fig. 5 bis Fig. 9 dargestellt, ist von einer Traineroberfläche 18 die Nierenbeckenstruktur der Diagnostikstruktur 1 mit Nierensteinen 7 durch die Öffnung 20 sichtbar.

Auf der Haube 21 ist ein drehbarer Ring 22 angeordnet, auf dem ein Führungselement 23 für eine Punktionskanüle angebracht ist, das sowohl im Winkel 24 wie auch in vertikaler Richtung 25 verstellt werden kann.

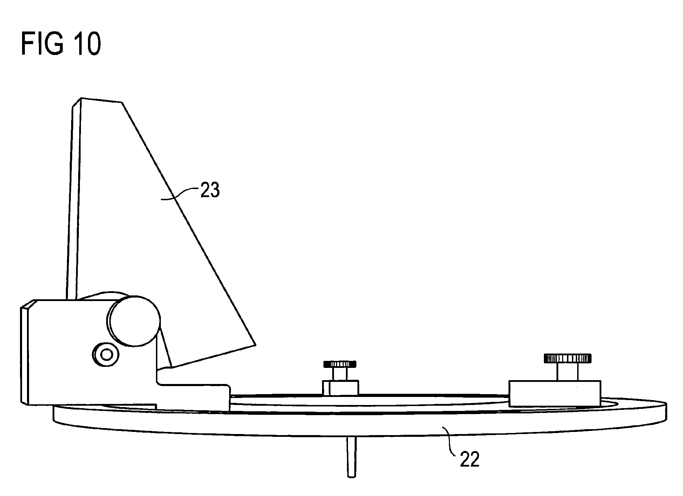

Die im Führungselement 23, wie es in Fig. 10 dargestellt ist, eingeführte Punktionskanüle wird mit Hilfe der beschriebenen Elemente 22 und 23 auf den diagnostizierten und zu beseitigenden Nierenstein 7 (zunächst in der Diagnostikstruktur) ausgerichtet, und wenn das erfolgt ist, die Position aller dieser Elemente 22 und 23 durch Festschrauben fixiert.

Der so erreichte Stand entspricht der Punktion von der Bauchdecke aus in die Niere mittels Ultraschall und Röntgenkontrolle.

Anschließend wird die Haube 21 geöffnet, die Punktionskanüle wurde vorher entfernt und der Diagnostik-Substratkörper 2 entfernt.

Nunmehr wird der Trainings-Substratkörper 8 in den Aufnahmeblock 17 eingesetzt. Dabei muss auf eine vorgegebene Markierung 19 ausgerichtet werden, um die Lage der Trainingsstruktur 13 genauso wie die Lage der Diagnostikstruktur 1 zu orientieren.

Davor wurde der Deckel 10 und der Boden 11 des in Dosenform gestalteten Trainings-Substratkörpers 8 abgezogen.

Der auf der Bodenseite des Trainings-Substratkörpers 8 befindliche Schlauch 16 wird aufgezogen. Er entspricht dem Nierenzugang über den Urether.

Die Oberseite wird mit einer elastischen, durchstechbaren Folie abgedeckt und durch Schließen der Haube 21 gespannt bzw. fixiert.

Nunmehr wird die Punktionskanüle in die Führung eingelegt und unter Beibehaltung der über das Führungselement 23 festgehaltenen Ortungsparameter in den Trainings-Substratkörper 8 eingestochen und soweit geführt bis der Stein 14 als Hemmnis spürbar wird.

Durch nunmehr erfolgende Füllung der Nierenstruktur 13 über den quasi Urether mit physiologischer Kochsalzlösung wird die richtige Lage der Punktionskanüle dann bestätigt, wenn Flüssigkeit aus der Punktionskanüle distal austritt.

Ist das der Fall, können alle weiteren Schritte erfolgen:
- Einführen eines Führungsdrahtes
- Einführen von Schäften in gestaffelten Durchmessern bis die erforderlichen Lumen für die OP-Instrumente erreicht sind.

Um das Ablegen von Instrumenten zu erleichtern ist eine flexible Ablageeinrichtung 26 wahlweise auf der rechten oder linken Seite der Haube 21 plazierbar.

Um ein insbesondere aus dem Trainings-Substratkörper 8 auslaufendes Wasser aufzunehmen, ist unter dem Aufnahmeblock 17 eine Auffangwanne 27 angeordnet, die mit einem Schlauchanschluss 28 versehen ist.

Das praxisnahe Vorgehen bezüglich Instrumentenapplikation, Nierenzugang über den Urether und die Lithotripsie mittels der unterschiedlichsten Techniken sind relevant für die Aus- und Weiterbildung und das Operationstraining für den Arzt, aber auch für die OP-Schwester.

### Bezugszeichenliste

- 1: Diagnostikstruktur
- 2: Diagnostik-Substratkörper
- 3: Dose
- 4: oberer Deckel
- 5: unterer Deckel
- 6: Strukturkörper
- 7: Simulat eines Nierensteines
- 8: Trainings-Substratkörper
- 9: Dose
- 10: oberer Deckel
- 11: unterer Deckel
- 12: Strukturkörper
- 13: Trainingsstruktur
- 14: Simulat eines Nierensteines
- 15: Gewebeschicht
- 16: Schlauch
- 17: Aufnahmeblock
- 18: Traineroberfläche
- 19: Markierung
- 20: Öffnung
- 21: Haube
- 22: drehbarer Ring
- 23: Führungselement
- 24: Winkel
- 25: vertikale Richtung
- 26: flexible Ablagevorrichtung
- 27: Auffangwanne
- 28: Schlauchanschluss

## Patentansprüche

1. Vorrichtung zum Trainieren von Operationen der perkutanen Nierenstein-Lithotripsie, **gekennzeichnet durch** eine Haube (21), einen unter einer Öffnung (20) in der Haube (21) angeordneten Aufnahmemittel (17) zur Aufnahme eines Substratkörpers (2, 8) und einen um die Öffnung (20) schwenkbaren Ring (22) der mit einem winkelverstellbaren Führungselement (23) verbunden ist.

2. Vorrichtung nach Anspruch 1, **dadurch gekennzeichnet, dass** unter der Haube (21) ein das Aufnahmemittel (17) aufnehmenden Auffangwanne (27) angeordnet ist.

3. Vorrichtung nach Anspruch 1 oder 2, **dadurch gekennzeichnet, dass** die Haube (21) um eine im wesentlichen horizontale Achse schwenkbar angeordnet ist.

4. Vorrichtung nach Anspruch 2 oder 3, **dadurch gekennzeichnet, dass** die Haube mit der Auffangwanne (27) schwenkbar verbunden ist.

5. Vorrichtung nach einem der Ansprüche 1 bis 4, **dadurch gekennzeichnet, dass** die Haube (21) Stützmitteln (26) zur Instrumentenablage versehen ist.

6. Substratkörper zum Trainieren von Operationen der perkutanen Nierenstein-Lithotripsie, **dadurch gekennzeichnet, dass** in einer Dose (3, 9) eine Struktur (1, 13) in Form einer Nierenbeckenstruktur vorgesehen ist, wobei die Dose (3, 9) durch einen entfernbaren Deckel (4, 10) und einen entfernbaren Boden (5, 11) verschlossen ist.

7. Substratkörper nach Anspruch 6, **dadurch gekennzeichnet, dass** dieser als Trainings-Substratkörper (8) ausgebildet ist, indem zwischen der Struktur als Trainingsstruktur (13) und dem Deckel (10) eine Schicht (15) aus einer fleischähnlichen Substanz angeordnet ist.

8. Substratkörper nach Anspruch 6 oder 7, **dadurch gekennzeichnet , dass** in die Nierenbeckenstruktur Simulate (7, 14) von Nierensteinen eingebracht sind.

9. Verfahren zum Trainieren von Operationen der perkutanen Nierenstein-Lithotripsie mit einer Vorrichtung nach einem der Ansprüche , **dadurch gekennzeichnet, dass**
- ein mit einer sichtbaren Diagnostikstruktur (1) versehener Diagnostik-Substratkörper (2) mit seiner Diagnostikstruktur (1) lageorientiert fixiert wird,
- eine Punktionskanüle in der Diagnostikstruktur (1) positioniert wird und die damit erreichte geometrische Lage über Positionierhilfsmittel (22, 23) eindeutig festgehalten wird,
- der Diagnostik-Substratkörper (2) durch einen Trainings-Substratkörper (8) mit einer zu der Diagnostikstruktur (1) identischen jedoch nicht sichtbaren Trainingsstruktur (13) ersetzt und identisch lageorientiert fixiert wird,
- die Punktionskanüle entsprechend der mittels der Positionierhilfsmittel (22, 23) festgehaltenen geometrischen Lage in den Trainings-Substratkörper (8) mit der Trainingsstruktur (13) unter Schaffung eines Arbeitskanales in der Abdeckung (15) der Trainingsstruktur (13) eingebracht wird,
- die Punktionkanüle entfernt wird,
- in den Arbeitskanal ein Operationsinstrument eingebracht wird und
- mit dem Operationselement die Trainingsstruktur (13) bearbeitet wird.

10. Verfahren nach Anspruch 9, **dadurch gekennzeichnet, dass** nach dem Einbringen der Punktionskanüle in den Trainings-Substratkörper (8) in die Punktionskanüle ein Führungsdraht eingebracht wird, der nach Entfernen der Punktionskanüle in dem Trainings-Substratkörper (8) verbleibt.

11. Verfahren nach Anspruch 9 oder 10, **dadurch gekennzeichnet, dass** der Arbeitskanal vor dem Einbringen des Operationsinstrumentes puschiert wird.
